# FASCICULE DE BREVET EUROPEEN

(11) **EP 3 208 707 B1**
(45) Date de publication et mention de la délivrance du brevet: **01.12.2021**
(21) Numéro de dépôt: 17156298.6
(22) Date de dépôt: 15.02.2017
(51) Int. Cl.: G06F 3/14, G09G 5/14, G06F 3/048, G01C 23/00, G05D 1/00

(54) **INTERFACE POUR AÉRONEF ET PROCÉDÉ DE COMMANDE D'UNE TELLE INTERFACE**
SCHNITTSTELLE FÜR FLUGZEUGE UND VERFAHREN ZUR STEUERUNG EINER SCHNITTSTELLE
INTERFACE FOR AIRCRAFT AND METHOD FOR CONTROLLING SUCH AN INTERFACE

(30) Priorité: 22.02.2016 FR 1651426
(43) Date de publication de la demande: 23.08.2017
(73) Titulaire: Zodiac Aero Electric, 93100 Montreuil (FR)
(72) Inventeur: DE BOSSOREILLE, Romain, 75017 PARIS (FR)
(74) Mandataire: Casalonga

(56) Documents cités:
- WO-A1-2011/106379
- WO-A1-2012/112090
- WO-A1-2013/013243
- US-A1- 2008 208 399
- US-A1- 2014 222 254
- US-A1- 2015 019 967
- US-B1- 6 401 013
- DAVID ALLEN: "Electronic Flight Bag (EFB)", INTERNET CITATION, 10 octobre 2006 (2006-10-10), pages 1-17, XP002496643, Extrait de l'Internet: URL:http://web.archive.org/web/20061010202 846/http://www.boeing.com/commercial/aerom agazine/aero_23/EFB_story.html [extrait le 2008-09-22]

## Description

La présente invention concerne, de manière générale, les interfaces pour aéronefs.

Les interfaces pour aéronefs peuvent être placées dans le cockpit d'un aéronef ou dans la cabine. Par exemple, en ce qui concerne les interfaces situées dans un cockpit, celles-ci comportent plusieurs panneaux de commande, notamment un panneau principal central regroupant l'essentiel des écrans de navigation et de contrôle, un panneau inférieur, qui regroupe l'essentiel des commandes de vol, et un panneau supérieur, qui assure notamment la gestion de divers circuits hydrauliques et électriques embarqués à bord de l'aéronef.

Ces panneaux, et en particulier le panneau central, sont dotés d'un certain nombre d'écrans qui permettent l'affichage de données de vol et, lorsque ces écrans sont tactiles, permettent de saisir des commandes de diverses fonctions embarquées à bord de l'avion.

Par ailleurs, les compagnies aériennes distribuent à leurs pilotes des documentations qui sont consultables pour accéder à un certain nombre de données. Il peut s'agir de manuels d'exploitation, de cartes de navigation, de documentations concernant l'exploitation de l'avion,...

De plus en plus, ces documentations sont fournies sur des supports électroniques, notamment sous la forme d'ordinateurs portables ou de tablettes tactiles grand public. Ces supports électroniques sont connus sous le terme anglo-saxon de « Electronic Flight Bag » ou « EFB ».

Il a été constaté que l'usage des tablettes tactiles tend à se répandre de plus en plus au sein des compagnies aériennes, notamment en raison de leur encombrement relativement réduit et de leur simplicité d'utilisation. Il est en particulier possible de stocker dans les tablettes des applications spécifiques les rendant personnalisables par le pilote ou par les compagnies aériennes pour améliorer l'ergonomie. Les tablettes présentent à cet égard une ergonomie particulièrement appropriée pour l'affichage de cartes de navigation.

Il a en outre été constaté que les tablettes peuvent être rapidement mises à jour et ce, à moindre coût.

On se référera par exemple aux documents WO2011106379, US2014222254, US2008208399, WO2013013243, WO2012112090 et US2015/019967.

En outre, le document US6401013 révèle une méthode et un système d'intégration d'un ordinateur personnel portable dans le cockpit d'un avion offrant un avantage spécifique pour permettre l'utilisation d'un ordinateur portable relativement peu coûteux dans le cockpit d'un avion tout en utilisant simultanément l'équipement avionique de bord pour surmonter certaines des insuffisances inhérentes à un ordinateur portable.

On conçoit toutefois que l'utilisation de tablettes tactiles dans un cockpit d'aéronef pose un certain nombre d'inconvénients majeurs.

En premier lieu, la technologie tactile employée sur une tablette, par exemple une tablette capacitive, peut être perturbée par des champs magnétiques et provoquer ainsi un comportement indésirable ou conduire à donner des informations erronées ou hors de propos, ce qui peut s'avérer dangereux.

Par ailleurs, les tablettes tactiles, qui sont aisément manipulables, restent toutefois encombrantes dans la mesure où elles doivent être maintenues manuellement en permanence ou être posées sur le cockpit, aucun logement n'étant prévu dans le cockpit pour les recevoir. Ainsi, elles peuvent tomber, se briser, être projetées ou tomber sur un équipement.

En outre, malgré leur facilité d'usage, certaines gestuelles tactiles peuvent être inconfortables lors de certaines phases de vol.

Leurs performances en termes de luminosité, de contraste et de colorimétrie peuvent de surcroît être insuffisantes pour une utilisation dans un cockpit d'aéronef.

Il a par ailleurs été constaté que l'autonomie de la tablette peut être inférieure à celle d'un vol. Des solutions telles que des câbles ou des supports sont proposées pour interconnecter la tablette à des équipements de l'aéronef mais elles impliquent à l'utilisateur de devoir continuer à interagir directement sur la tablette ce qui n'élimine pas les défauts précédemment exposés. Enfin, de manière générale, les applications présentes sur la tablette peuvent distraire l'utilisateur, notamment un pilote dans un cockpit d'aéronef. L'absence de mécanisme permettant de désactiver certaines applications et/ou notifications indésirables, notamment en cas d'alarme, constitue un danger.

Au vu de ce qui précède, le but de l'invention est de pallier les divers inconvénients précités et de fournir une interface pour aéronef permettant et facilitant l'usage de tablettes tactiles, et de manière générale d'équipements informatiques portables, à bord de l'aéronef.

L'invention a donc pour objet, selon un premier aspect, une interface pour aéronef, comprenant un ensemble d'au moins un dispositif d'affichage pour l'affichage de données et au moins un support pour équipement informatique portable comprenant des moyens d'alimentation de l'équipement informatique.

L'interface comprend en outre des moyens de transfert bidirectionnels de données vers l'équipement informatique et une passerelle de communication entre le support et le dispositif d'affichage comprenant des moyens de recopie de données d'image pour recopier les données d'image issues de l'équipement informatique sur une partie au moins de l'écran d'au moins l'un des dispositifs d'affichage et des moyens de transfert de données représentatives d'une gestuelle de commande entre le dispositif d'affichage et le support.

On notera que l'équipement informatique peut être constitué par tout type d'équipement de type tablette tactile ou ordinateur portable.

Ainsi, l'équipement informatique peut être positionnée dans un support dédié, qui assure son alimentation et le transfert bidirectionnel de données entre un ou plusieurs écrans du dispositif d'affichage de l'aéronef et l'équipement informatique afin, notamment, d'incruster sur un écran du dispositif d'affichage les informations disponibles sur l'équipement informatique et permettre la saisie de commandes directement à partir du dispositif d'affichage.

L'équipement informatique, pouvant être protégé de l'extérieur par le support, peut alors être commandé à partir de l'écran du panneau de commande.

Avantageusement, le dispositif d'affichage comporte des formes autour de l'écran telles que des rainures ou proéminences permettant à un utilisateur de faciliter l'interaction avec le dispositif tactile lors des différentes phases de vol, notamment lors de turbulences, tout en réduisant la fatigue musculaire liée à l'interaction.

Bien entendu, des informations complémentaires, issues par exemple d'un calculateur embarqué, peuvent être affichées conjointement avec les données d'image recopiées, avantageusement sous la forme d'une fenêtre placée à côté de la fenêtre de recopie des données d'image issues de l'équipement informatique.

Ainsi, selon une autre caractéristique de l'interface selon l'invention, la passerelle de communication comprend un intégrateur de données adapté pour fusionner les données issues de l'équipement informatique, les données issues du dispositif d'affichage et les données issues du calculateur et pour répartir des données entre le dispositif d'affichage, l'équipement informatique et le calculateur.

De manière générale, la passerelle de communication est en outre adaptée pour le transfert d'ordres de commande saisis manuellement sur ledit dispositif d'affichage vers l'équipement informatique et/ou vers le calculateur.

Avantageusement, la passerelle comporte un convertisseur de données entre l'équipement informatique et le calculateur, d'une part, et le dispositif d'affichage, d'autre part. Avantageusement, l'écran du dispositif d'affichage comporte des zones tactiles reproduisant des boutons de commande respectifs prévus sur l'équipement informatique.

De préférence, le support est placé dans un logement équipé de moyens de protection contre des agressions extérieures telles que, de manière non-limitative, des rayonnements électromagnétiques, des chocs ou encore des liquides.

On prévoira en outre, de préférence, des moyens pour désactiver des fonctionnalités de l'équipement informatique, notamment des fonctionnalités de communication sans fil de l'équipement informatique.

L'invention a également pour objet, selon un deuxième aspect, un procédé de commande de l'affichage de données sur une interface telle que définie ci-dessus, dans lequel on affiche les données d'image issues de l'équipement informatique sur au moins une partie de l'écran du dispositif d'affichage et l'on transfert des données représentatives d'une gestuelle de commande entre le dispositif d'affichage et l'équipement informatique.

De préférence, selon ce procédé, on incruste les données de l'équipement informatique dans une première zone de l'écran du dispositif d'affichage et l'on affiche des données issues du calculateur embarqué sur une deuxième zone de l'écran.

D'autres buts, caractéristiques et avantages de l'invention apparaîtront à la lecture de la description suivante, donnée uniquement à titre d'exemple, et faite en référence aux dessins annexés sur lesquels :
- la figure 1 illustre une vue générale d'une interface conforme à l'invention ;
- la figure 2 illustre un exemple de mise en œuvre de l'interface visible sur la figure 1 ; et
- la figure 3 est une vue de l'interface pour aéronef selon l'invention, montrant la recopie des données d'image issues de l'équipement informatique sur l'écran du dispositif d'affichage. On se référera tout d'abord à la figure 1 qui illustre, de manière schématique, la structure générale d'une interface pour aéronef conforme à l'invention.

Dans un mode de mise en œuvre nullement limitatif, cette interface est destinée à être embarquée à bord d'un avion, par exemple dans le cockpit de l'avion ou en cabine. Mais on ne sort pas du cadre de l'invention lorsque l'interface est destinée à être implantée dans d'autres types d'aéronef.

Cette interface, désignée par la référence I, est destinée à établir une interaction entre un équipement informatique et un dispositif d'affichage A embarqué à bord de l'aéronef. Il peut s'agir d'un dispositif d'affichage équipant classiquement les cockpits des aéronefs pour l'affichage d'informations relatives à des fonctions d'avionique et, lorsqu'il s'agit de dispositifs d'affichage tactiles, pour récupérer des ordres de commande entrés manuellement par un pilote. Il peut également s'agir d'un dispositif d'affichage d'un système de divertissement équipant classiquement les cabines d'aéronef, à disposition des passagers.

La portée de l'invention est définie par les revendications annexées. Dans l'exemple de réalisation considéré, l'équipement informatique est constitué par une tablette tactile T, par exemple une tablette tactile grand public ou une tablette tactile spécifiquement conçue pour l'application envisagée.

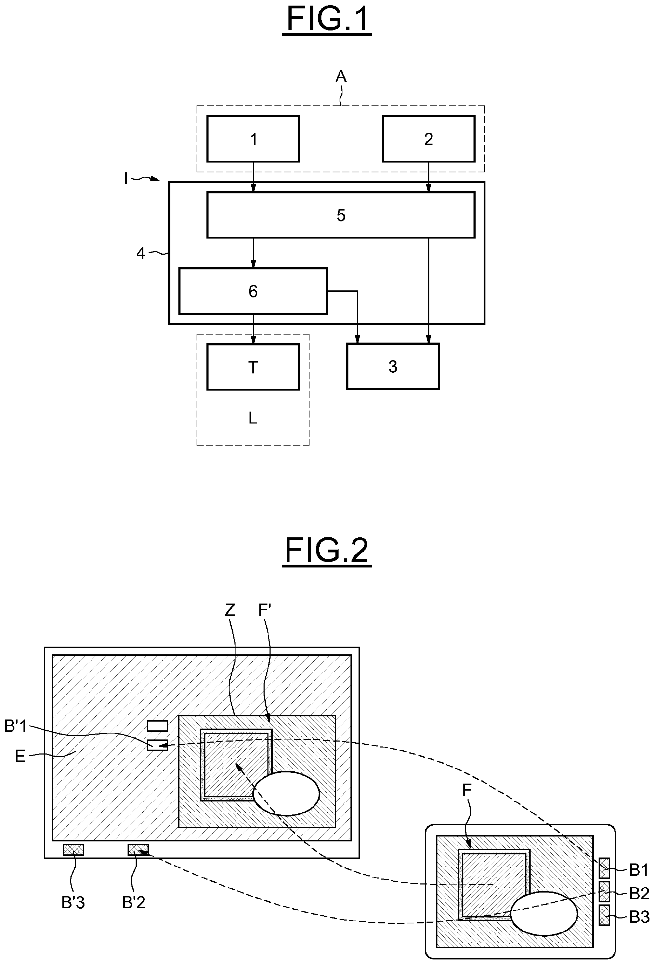

Dans l'exemple de réalisation illustré sur la figure 1, le dispositif d'affichage comporte un écran tactile. Ainsi, sur la figure 1, le dispositif d'affichage A a été schématisé par son écran 1 et son capteur tactile 2. Il est destiné à l'affichage de données, par exemple des images fixes ou des vidéos délivrées par un calculateur 3 embarqué à bord de l'aéronef. Il peut s'agir d'un calculateur de l'avionique ou d'un calculateur du système de divertissement de l'aéronef. On notera toutefois que le calculateur 3 est optionnel de sorte que le contenu affiché sur le dispositif d'affichage peut provenir d'une autre source.

L'interface I comporte par ailleurs un logement L destiné à recevoir la tablette tactile T.

Ce logement constitue un support équipé d'une connectique appropriée pour le raccordement de la tablette en vue de son alimentation et d'assurer un transfert bidirectionnel de données vers la tablette et à partir de cette dernière.

On notera que dans l'exemple de réalisation représenté, l'interface comporte un unique logement L. Bien entendu, on ne sort pas du cadre de l'invention lorsque l'on prévoit un ou plusieurs logements destinés chacun à recevoir une tablette tactile.

L'interface I est par ailleurs dotée d'une passerelle 4 de communication entre le logement L et le dispositif d'affichage A.

Cette passerelle 4 comporte un intégrateur de données 5 ainsi qu'un convertisseur de données 6. Par données, on entend ici des données d'image, fixes ou mobiles, des données tactiles résultant d'une manipulation de l'écran tactile du dispositif d'affichage et des données métiers concernant l'aéronef. L'intégrateur 5 communique avec le dispositif d'affichage A, avec le calculateur embarqué 3 et avec le logement L par l'intermédiaire du convertisseur 6.

Le convertisseur assure une conversion de format entre le dispositif d'affichage, la tablette et le calculateur.

L'intégrateur 5 reçoit les données issues du dispositif d'affichage A, de la tablette T et du calculateur 3, procède à la composition graphique de ces données et leur répartition entre le dispositif d'affichage A, la tablette T et le calculateur.

Lorsque qu'il s'agit de récupérer un contenu, par exemple des images fixes ou des vidéos issues de la tablette T, l'intégrateur 5 assure une composition graphique des données récupérées et procède à l'affichage de ces données sur l'écran 1. Il peut par exemple s'agir d'afficher des cartes de navigation issues de la tablette sur l'écran 1, lorsque l'interface est destinée à être placée dans le cockpit de l'aéronef ou d'un contenu vidéo extrait de la tablette lorsque l'interface est destinée à être placée dans la cabine.

On notera à cette égard que l'intégrateur procède à une recopie des données d'image issues de la tablette de manière à les afficher sur une partie de l'écran du dispositif d'affichage ou sur la totalité de l'écran d'affichage. Dans ce dernier cas, l'intégrateur assure une partition de l'écran du dispositif d'affichage pour délimiter des zones de l'écran attribuées l'une à l'affichage d'un contenu issu de la tablette et l'autre à un contenu issu du calculateur 3.

On a schématiquement représenté sur la figure 2 la recopie des données d'image issues mise en œuvre entre l'écran de la tablette tactile et un écran 1 du dispositif d'affichage.

Comme on le voit, l'écran de la tablette (zone Z) est recopié et affiché dans une zone Z', de taille identique, voire de dimensions accrues jusqu'à, le cas échéant, recouvrir tout l'écran 1 du panneau de commande.

Les boutons mécaniques de commande B1, B2 et B3 qui sont prévus sur le cadre de la tablette, c'est-à-dire sur la partie mécanique de la tablette, sont également dupliqués sur le dispositif d'affichage A.

Il peut par exemple s'agir de prévoir des zones tactiles sur l'écran 1 (bouton B'1) pour dupliquer un ou plusieurs boutons mécaniques B 1 du cadre.

D'autres boutons mécaniques B2 et B3 peuvent également être dupliqués sous la forme de boutons correspondants prévus sur le cadre du dispositif d'affichage A (boutons B'2 et B'3). Ils pourraient bien entendu, en variante, être dupliqués sous la forme de zones tactiles du dispositif d'affichage A.

Ainsi, l'utilisateur, c'est à dire le pilote ou un passager, dispose des informations qui sont affichées sur l'écran de la tablette et de l'ensemble des boutons de commande permettant de piloter la tablette et qui sont dupliqués sur l'écran 1.

Comme indiqué précédemment, l'intégrateur assure une partition du dispositif d'affichage A en délimitant des zones dédiées respectivement à l'affichage de données issues de la tablette et de données provenant du calculateur embarqué.

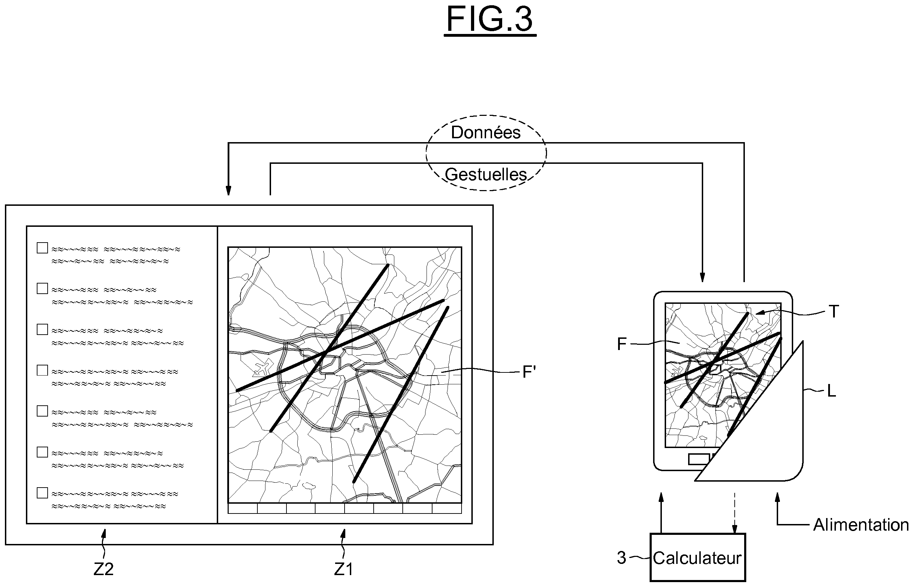

Sur la figure 3, sur laquelle on a représenté un exemple d'interface pour cockpit d'un aéronef, la tablette T est placée dans son logement L. Le logement L est alimenté par le réseau de bord de l'aéronef, et alimente dès lors la tablette, et communique avec le calculateur 3 de l'aéronef et avec le dispositif d'affichage A par l'intermédiaire de la passerelle 4 pour l'échange de données d'images fixes ou de vidéos vers le dispositif d'affichage, d'une part, et pour l'échange de données issues du capteur tactile de l'écran du dispositif d'affichage vers la tablette ou vers le calculateur, d'autre part.

Comme on le voit, l'image de la tablette (fenêtre F) est incrustée dans une zone Z1 dédiée à l'affichage du contenu extrait de la tablette (fenêtre F').

Par ailleurs, une deuxième zone Z2 est dédiée à l'affichage de données issues du calculateur, par exemple des données concernant le pilotage de l'aéronef.

Une telle partition est également prévue lorsque l'interface est destinée à être embarquée en cabine pour l'affichage simultané du contenu de la tablette et du contenu issu du calculateur du système de divertissement, par exemple des données concernant le vol (altitude, vitesse, ...) ou des données d'autres natures provenant du système de divertissement (publicité, ...).

Bien entendu, lorsque l'écran du dispositif d'affichage est un écran tactile, l'écran est partitionné de manière que la passerelle 4 soit en mesure de récupérer les gestuelles issues de manipulation des zones respectives Z1 et Z2 pour les envoyer vers la tablette ou le calculateur.

Ainsi, lorsqu'une manipulation gestuelle concerne la zone Z2 dédiée à l'affichage de données de l'avionique, cette gestuelle, récupérée par l'intégrateur 5, est transmise vers le calculateur ou de manière générale, vers un système de l'avionique auquel une commande correspondante est destinée.

Lorsque la gestuelle concerne la zone Z1 dédiée à l'affichage du contenu de la tablette, cette gestuelle est récupérée par l'intégrateur 5 et est transmise à la tablette par l'intermédiaire du convertisseur 6.

L'invention permet ainsi la réalisation d'une connexion entre une tablette tactile grand public, ou une tablette tactile spécifiquement dédiée à une utilisation dans le domaine de l'aviation, et un écran d'un dispositif à affichage embarqué et de se servir des équipements de l'aéronef pour interagir avec la tablette.

On notera que, de préférence, le logement L est doté de moyens de protection de la tablette contre des rayonnements électromagnétiques. Bien entendu, lorsque la tablette est rangée dans le logement, elle est protégée contre des agressions extérieures, par exemple des chutes de liquide ou contre les chocs. Tout risque de chute de la tablette est bien entendu évité.

On pourra enfin avantageusement prévoir sur l'écran 1 un bouton spécifique permettant de désactiver certaines fonctionnalités de la tablette, par exemple de désactiver des moyens de communication sans fil vers et depuis la tablette, ou de désactiver certaines applications stockées dans la tablette.

On notera enfin que dans l'exemple de réalisation présentée, les divers éléments de l'interface communiquent par liaison filaires. Tel est en particulier le cas du logement L et de la passerelle Bien entendu, on peut également prévoir une communication sans fil entre ces divers éléments.

## Revendications

1. Interface pour aéronef, comprenant un ensemble d'au moins un dispositif d'affichage ayant un écran pour l'affichage de données, comportant au moins un support (L) pour équipement informatique portable comprenant des moyens d'alimentation de l'équipement informatique portable, des moyens de transfert bidirectionnels de données depuis et vers l'équipement informatique et une passerelle (4) de communication entre le support et le dispositif d'affichage embarqué, comprenant des moyens de recopie de données d'image pour recopier les données d'image issues de l'équipement informatique sur une partie au moins de l'écran d'au moins l'un des dispositifs d'affichage et des moyens de transfert de données représentatives d'une gestuelle de commande entre le dispositif d'affichage et le support, **caractérisé en ce que** la passerelle de communication (4) comprend un intégrateur de données (5) adapté pour fusionner les données issues de l'équipement informatique, les données issues du dispositif d'affichage et les données issues d'un calculateur embarqué à bord de l'aéronef et pour répartir les données entre le dispositif d'affichage, l'équipement informatique et le calculateur et un convertisseur de données (6) disposé entre l'équipement informatique portable et le calculateur d'une part, et l'équipement informatique portable et le dispositif d'affichage, d'autre part, le support étant placé dans un logement (L) assurant la protection de l'interface contre des agressions extérieures et **en ce que** l'écran du dispositif d'affichage comporte des zones tactiles reproduisant des boutons de commande respectifs prévus sur l'équipement informatique,
la passerelle de communication étant en outre adaptée pour le transfert d'ordres de commande saisis manuellement sur ledit dispositif d'affichage vers l'équipement informatique et/ou vers ledit calculateur et un bouton spécifique pour désactiver des fonctionnalités de l'équipement informatique, notamment des fonctionnalités de communication sans fil de l'équipement informatique.

2. Procédé de commande de l'affichage de données sur une interface selon la revendication 1, **caractérisé en ce que** l'on affiche l'écran de l'équipement informatique sur l'écran du dispositif d'affichage en recopiant les données d'image issues de l'équipement informatique sur au moins une partie de l'écran du dispositif d'affichage et l'on transfert des données représentatives d'une gestuelle de commande entre le dispositif d'affichage et l'équipement informatique.

3. Procédé selon la revendication 2, dans lequel on incruste des données d'image issues de l'équipement informatique dans une première zone de l'écran du dispositif d'affichage et l'on affiche des données issues du calculateur embarqué sur une deuxième zone du dispositif d'affichage.

## Patentansprüche

1. Schnittstelle für Luftfahrzeug, umfassend eine Einheit von mindestens einer Anzeigevorrichtung, die einen Bildschirm aufweist, zur Anzeige von Daten, umfassend mindestens einen Träger (L) für tragbare Hardware, umfassend Stromversorgungsmittel der tragbaren Hardware, bidirektionale Mittel zur Übertragung von Daten von der und an die Hardware und ein Kommunikationsgateway (4) zwischen dem Träger und der eingebetteten Anzeigevorrichtung, umfassend Bilddatenkopiermittel zum Kopieren von Bilddaten, die von der Hardware stammen, auf mindestens einen Teil des Bildschirms von mindestens einer der Anzeigevorrichtungen und Mittel zur Übertragung von Daten, die eine Befehlsgeste zwischen der Anzeigevorrichtung und dem Träger darstellen, **dadurch gekennzeichnet, dass** das Kommunikationsgateway (4) einen Datenintegrator (5), der zum Zusammenführen der Daten, die von der Hardware stammen, der Daten, die von der Anzeigevorrichtung stammen, und der Daten, die von einem eingebetteten Rechner an Bord des Luftfahrzeugs stammen, und zum Verteilen der Daten zwischen der Anzeigevorrichtung, der Hardware und dem Rechner, und einen Datenwandler (6) umfasst, der zwischen der tragbaren Hardware und dem Rechner einerseits und der tragbaren Hardware und der Anzeigevorrichtung andererseits angeordnet ist, wobei der Träger in einem Gehäuse (L) platziert ist, das den Schutz der Schnittstelle vor Angriffen von außen sicherstellt, und dass der Bildschirm der Anzeigevorrichtung Berührungszonen umfasst, die jeweilige Bedienknöpfe reproduzieren, die auf der Hardware vorgesehen sind,
wobei das Kommunikationsgateway weiterhin für die Übertragung von Steuerbefehlen, die manuell auf der Anzeigevorrichtung eingegeben werden, an die Hardware und/oder an den Rechner eingerichtet ist, und einen spezifischen Knopf zum Deaktivieren von Funktionalitäten der Hardware, insbesondere drahtlosen Kommunikationsfunktionalitäten der Hardware.

2. Verfahren zur Steuerung der Anzeige von Daten auf einer Schnittstelle nach Anspruch 1, **dadurch gekennzeichnet, dass** der Bildschirm der Hardware auf dem Bildschirm der Anzeigevorrichtung angezeigt wird, indem die Bilddaten, die von der Hardware stammen, auf mindestens einen Teil des Bildschirms von mindestens einer der Anzeigevorrichtungen kopiert werden, und Daten, die eine Befehlsgeste zwischen der Anzeigevorrichtung und der Hardware darstellen, übertragen werden.

3. Verfahren nach Anspruch 2, wobei Bilddaten, die von der Hardware stammen, in eine erste Zone des Bildschirms der Anzeigevorrichtung eingefügt werden und Daten, die von dem eingebetteten Rechner stammen, auf einer zweiten Zone der Anzeigevorrichtung angezeigt werden.

## Claims

1. An interface for an aircraft, comprising a set of at least one display device having a screen for displaying data, including at least one medium (L) for portable computer equipment comprising means for powering the portable computer equipment, bidirectional data transfer means from and to the computer equipment and a communication gateway (4) between the medium and the onboard display device, comprising image data copyback means in order to copy the image data from the computer equipment on at least one portion of the screen of at least one of the display devices and data transfer means representative of a control gesture between the display device and the medium, **characterised in that** the communication gateway (4) comprises a data integrator (5) adapted to merge the data from the computer equipment, the data from the display device and the data from a computer onboard the aircraft and to distribute the data between the display device, the computer equipment and the computer and a data converter (6) disposed between the portable computer equipment and the computer, on the one hand, and the portable computer equipment and the display device, on the other hand, the medium being placed in a housing (L) ensuring the protection of the interface against external aggressions and **in that** the screen of the display device includes touch areas reproducing respective control buttons provided on the computer equipment,
the communication gateway being further adapted for transferring control commands entered manually on said display device to the computer equipment and/or to said computer and a specific button for deactivating functionalities of the computer equipment, in particular wireless communication functionalities of the computer equipment.

2. The method for controlling the display of data on an interface according to claim 1, **characterised in that** the screen of the computer equipment is displayed on the screen of the display device by copying the image data from the computer equipment on at least one portion of the screen of the display device and data representative of a control gesture is transferred between the display device and the computer equipment.

3. The method according to claim 2, wherein image data from the computer equipment is embedded in a first area of the screen of the display device and data from the onboard computer is displayed on a second area of the display device.
